# EUROPEAN PATENT APPLICATION

(11) **EP 4 775 829 A1**
(43) Date of publication of application: **15.07.2026**
(21) Application number: 25150921.2
(22) Date of filing: 09.01.2025
(51) Int. Cl.: F03D 1/06, B29C 70/44, B29C 70/54, B32B 3/14, B32B 5/26, B32B 3/02, B22C 9/10, B29D 99/00

(54) **METHOD FOR MANUFACTURING A HALF SHELL OF A WIND TURBINE ROTOR BLADE, CORE ELEMENT AND WIND TURBINE ROTOR BLADE**

(71) Applicant: Nordex Energy SE & Co. KG, 22419 Hamburg (DE)
(72) Inventor: Mahadevaswamy, Naveen, 22419 Hamburg (DE)
(74) Representative: Völkl Siebenson Patentanwälte - Partnerschaft mbB

(57) **Abstract**

Method of manufacturing a half shell of a wind turbine rotor blade (110), the method comprising the following steps:
a) providing a mold for the half shell,
b) placing a fiber layer into the mold,
c) placing a stack of prefabricated pultruded planks and a core element on top of the fiber layer, wherein
the core element has an end face, said end face having at least two projections being integrally formed with the core element, and
the core element is arranged with the end face on a lateral side of the stack in such a way that by means of the at least two projections a gap is formed between the core element and the stack, and

d) supplying resin into the mold during a vacuum infusion process.

## Description

The present disclosure relates to the field of manufacturing wind turbine rotor blades, particularly to methods and processes for assembling and fabricating rotor blade components with improved efficiency.

Wind turbines with wind turbine rotor blades are widely known from the state of the art and are used to convert wind energy into electrical energy. Wind turbine rotor blades are usually manufactured in a shell design and comprise several components made of fiber reinforced laminate, like the aerodynamic shell. Typically, in a first step, half shells are produced from many layers of a fiber composite material, into which support structures such as spar caps are integrated. A resin infusion process takes place and the half shells cure in their half-shell molds. In a second step, the manufactured half-shells are placed on top of each other and bonded together for producing a wind turbine rotor blade. The half-shells and thus the finally produced wind turbine rotor blade may be segmented for manufacturing a so-called split or segmented wind turbine rotor blade.

For the resin infusion process, it is important to control the resin flow front during the infusion process to ensure that the resin infuses evenly and completely throughout the laminate layup and between all the shell components. Otherwise, air pockets or other defects in the structure may occur.

Current manufacturing processes for wind turbine rotor blades involve significant manual effort, particularly in the preparation and placement of laminate layers and core elements within molds prior to the resin infusion process. This requires highly skilled labor and the use of specialized tools, which increases complexity and limits the scalability of production. Furthermore, the extensive manual handling involved in these processes contributes to increased production time and costs, posing challenges in meeting the growing demand for rotor blades in a cost-effective manner.

It is therefore an object of the present disclosure to provide a technical concept for the manufacturing of wind turbine rotor blades to overcome the above limitations at least in part, thereby reducing the reliance on manual labor, saving time, and lowering production costs.

This object is solved by a solution according to the independent claim. Advantageous embodiments are given in the sub-claims.

According to a first aspect, a method for manufacturing a half shell of a wind turbine rotor blade is disclosed. The method comprises several steps:
a) providing a mold for the half shell,
b) placing a fiber layer into the mold,
c) placing a stack of prefabricated pultruded planks and a core element on top of the fiber layer, wherein
   the core element has an end face, said end face having at least two projections being integrally formed with the core element, and
   the core element is arranged with the end face on a lateral side of the stack in such a way that by means of the at least two projections a gap is formed between the core element and the stack, and
d) supplying resin into the mold during a vacuum infusion process.

The disclosed method improves the manufacture of a half shell of a wind turbine rotor blade. To produce the half shell, at least one stack of pultruded planks is arranged directly next to a core element. In order to enable a controlled resin infusion process, a predetermined gap is provided between the core element and the stack. The gap serves as a channel for the resin flow in the later resin infusion process. For this purpose, the core element integrally comprises at least two projections that ensure a defined distance, i.e. the gap, between the core element and the stack. In other words, the projections serve as spacers. The projections are formed in one piece with the core element and thus made of the same material. In the state, in which the stack and the core element are placed at its final position in the mold, the projections protrude towards the stack at an end face of the core element. The projections contact the lateral side of the stack, but do not necessarily need to, e.g. due to manufacturing tolerances. Thus, at least between the projections along the stack's main direction, the gap is provided in a defined and reliable manner.

By means of the above-described method and particularly the core element with its projections, the manufacturing time and costs can be significantly reduced. No additional, typically thick laminate spacer elements need to be installed between the core element and the stack. As these separate spacer elements would need to match the thickness, i.e. height, of the stack, they would need to be manually cut to the required dimensions. Such cutting, which would increase the costs, since special tools are required with regard to health and safety at work (short: HSE), can be avoided. The length of the projections according to the disclosed core element can automatically match the core element's height (thickness) and thus the height of the stack. Further, the placement of separate spacers would be a manual process, which is prone to errors like missing spacer positioning, wrong placement etc. Thus, the invention enables a proof and reliable solution. The risk of missing spacer application and the resulting rework can be drastically reduced.

The core element is, for example, a filler material. For example, the core element is made of or comprises balsa wood or polyurethane foam.

At least, two projections are present. Of course, e.g. depending on the length of the core element along the longitudinal direction of the rotor blade, three or more projections might be suitable.

The planks are pultruded planks, for example. The planks, for example, are made of a carbon fiber composite or a glass fiber composite. The stack of these planks is provided for forming a spar cap. The spar cap can be made of one single stack or a plurality of stacks arranged adjacent to each other.

According to an embodiment, in step c) the stack of planks is provided as a prefabricated, single component. Thus, the stack of planks is prefabricated, e.g. in a separate mold like a spar cap mold, where the planks are stacked and cured in a separate resin infusion process. Thus, the stack of planks can be placed into the mold for the half shell as one individual component. This contributes to an easy manufacturing and reduces the overall time that the mold is in place during the production of the half-shell and saves time when loading the mold before the infusion process.

According to an embodiment, in step c) the stack of planks is provided as a plurality of individual planks stacked on top of each other. In this embodiment, contrary to the above paragraph, each plank is placed into the mold individually. This means that essentially all fiber layers and planks are individually placed in the mold and the entire structure of the half shell is manufactured in a resin infusion process. This enables a high manufacturing quality to be achieved.

According to an embodiment, in step c) the stack of planks and the core element form together a prefabricated component being placed into the mold onto the fiber layer. Thus, not only the stack of planks, i.e. the spar cap, is prefabricated, but the stack of planks together with the core element is prefabricated to be a single component, which is then placed at once into the mold for the half shell. This contributes to the above-mentioned advantages. For example, the stack of planks is prefabricated with the core element in a separate mold, where the planks and the core element are cured in a separate resin infusion process.

According to an embodiment, each projection has a thickness between 1 mm to 2 mm from the end face, preferably between 1,3 mm to 2 mm, more preferably 1.5 mm, the thickness being measured in a direction normal to the end face. This means that the projections on the end face protrude by the above-mentioned dimensions. Tolerances of -0.2 /+ 0.5 mm are permissible. The projections thus protrude in a direction that is transverse to a spanwise direction. In other words, the projections thus protrude along the chordwise direction. This means, that the gap between the core element and the stack has at least the same distance, e.g. between 1 mm to 2 mm, between 1,3 mm to 2 mm or 1.5 mm.

According to an embodiment, at least one of the projections has a trapezoidal shaped cross section, viewed in a plane running parallel to a main extension direction of the core element. In other words, the trapezoidal shaped cross section is viewed in the flapwise direction. Preferably, all projections have a trapezoidal shape. Such shape contributes to a reliable and controlled resin flow. Particularly, it opens the corner between the projection and the remainder of the core element to an angle of more than 90°. In other embodiments, a rectangular or square shaped cross section can be chosen.

According to an embodiment, edges of each projection are rounded. Thus, the edges of the projections comprise a radius. For example, the projections are made by a milling or cutting tool. With such a tool, the rounded edges and thus fillets could be made. This contributes to a reliable and controlled resin flow. The radius, for example is between 0.5 to 2.0 mm, e.g. 1.5 mm, depending particularly on the milling tool and actual thickness of projection.

According to an embodiment, each projection has a width along a spanwise direction of the core element of at least 15 mm, preferably 20 mm, more preferably 25 mm. In one embodiment, the width is between 15 mm and 50 mm. This contributes to the above-mentioned functions and advantages.

According to an embodiment, the at least two projections have a length corresponding to the height of the end face of the core element. The height can be seen as the thickness of the core element at the end face thereof. This embodiment ensures that the projections extend over the entire thickness of the core element at the end face. Thus, the stack of planks is securely held in place against the core element, in particular when the planks are individually placed in the mold as described above.

According to a second aspect, a core element for a half shell of a wind turbine rotor blade is disclosed. The core element has an end face, the end face being configured to be arranged at a lateral side of a stack of prefabricated pultruded planks, the end face having at least two projections. The core element according to the second aspect enables the above-mentioned functions and advantages. The above description and embodiments with respect to the first aspect analogously apply to the core element and vice versa.

According to a third aspect a wind turbine rotor blade is disclosed. The wind turbine rotor blade comprises two half shells being bonded together to form the wind turbine rotor blade, wherein each half shell is manufactured by a method according to the first aspect. The wind turbine rotor blade enables the above-mentioned functions and advantages. The above description and embodiments with respect to the first aspect analogously apply to the wind turbine rotor blade and vice versa.

Further advantages, features and functions, which are explained in connection with the figures, are given in the following exemplary embodiments of the invention. Identical, similar or similarly acting elements are provided with the same reference signs in the figures.

### In the figures:

- FIG. 1: shows a schematic view of a wind turbine.
- FIG. 2: shows a schematic view of a rotor blade.
- FIG. 3: shows a schematic view of a cross-section of the wind turbine rotor blade with a core element according to an embodiment of the invention.
- FIG. 4a,b: illustrates a schematic mold for a half shell of the wind turbine rotor blade and a detail of the core element.
- FIG. 5: illustrates the core element in a perspective view.
- FIG. 6: illustrates a top view of a core element according to an embodiment of the invention.
- FIG. 7: illustrates a detail view of FIG. 5.
- FIG. 8: illustrates a core element according to another embodiment of the invention.
- FIG. 9: illustrates a schematic flowchart of a method according to an embodiment of the invention.

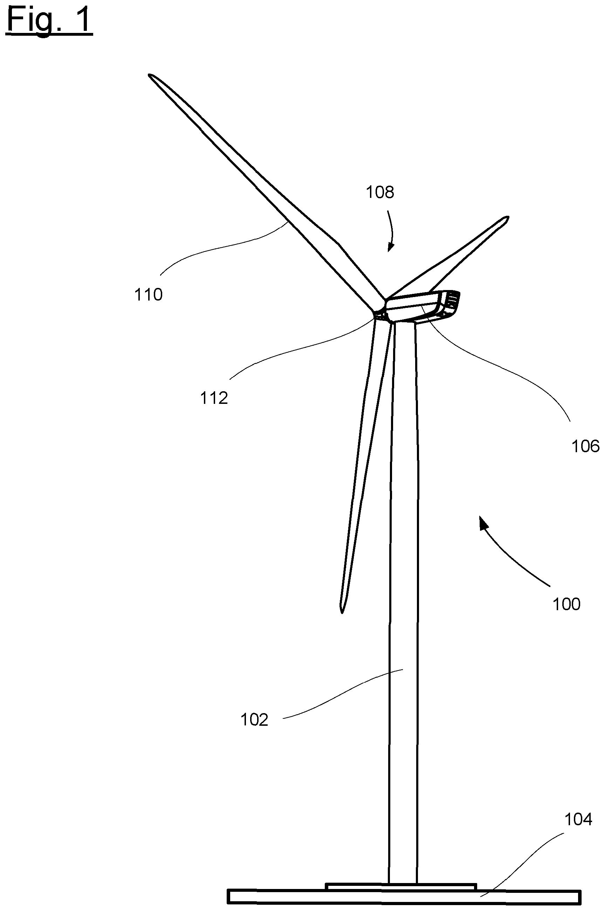

FIG. 1 shows a schematic view of a wind turbine 100, which comprises a tower 102. The tower 102 is fixed to the ground by means of a foundation 104. At one end of the tower 102 opposite to the ground a nacelle 106 is rotatably mounted. The nacelle 106, for example, comprises a generator which is coupled to a rotor 108 via a rotor shaft (not shown). The rotor 108 comprises one or more (wind turbine) rotor blades 110, which are arranged on a rotor hub 112.

During operation, the rotor 108 is set in rotation by an air flow, for example wind. This rotational movement is transmitted to the generator via the rotor shaft and, if necessary, a gearbox. The generator converts the mechanical energy of the rotor 108 into electrical energy.

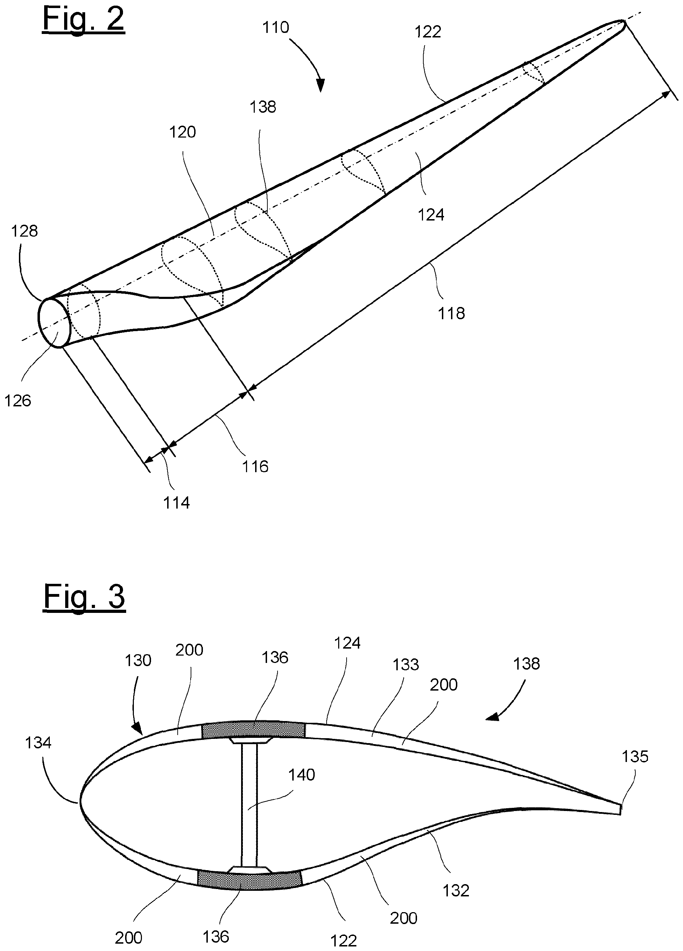

FIG. 2 shows an exemplary wind turbine rotor blade 110. The wind turbine rotor blade 110 has the shape of a conventional rotor blade and has a rotor blade root portion 114 facing the rotor hub 112. The rotor blade root portion 114 typically has an essentially circular cross-section. The rotor blade root portion 114 is followed by a transition portion 116 and profile portion 118. The wind turbine rotor blade 110 has a pressure side 122 and an opposite suction side 124 with respect to a spanwise direction 120 (also named main extension direction or longitudinal direction). The wind turbine rotor blade 110 is essentially hollow inside.

In the rotor blade root portion 114 a rotor blade root end 126 with a flange connection 128 is provided, by means of which the wind turbine rotor blade 110 can be mechanically connected to a pitch bearing or an extender. The wind turbine rotor blade 110 can be a segmented rotor blade.

FIG. 3 shows a schematic cross section profile 138 (see FIG. 2) of the wind turbine rotor blade 110 running traverse to the spanwise direction 120 (in a chordwise direction). The wind turbine rotor blade 110 comprises a shell 130, which is comprised by two half shells 132,133 wherein one half shell 132 corresponds to the pressure side 122 and the other half shell 133 to the suction side 124. The two half shells 132, 133 are firmly connected to each other along the longitudinal direction 120 at opposite connection regions 134. Each half shell 132, 133 may have a spar cap 136 embedded in the shell-structure. A spar cap 136 can also be generally named "main laminate" and carries main loads during operation of the wind turbine rotor blade 110. The wind turbine rotor blade 110 further comprises at least one shear web 140 connecting the spar caps 136. Next to a spar cap 136, a half shell 132 comprises core elements 200 (there might be many more core elements in the half shells 132).

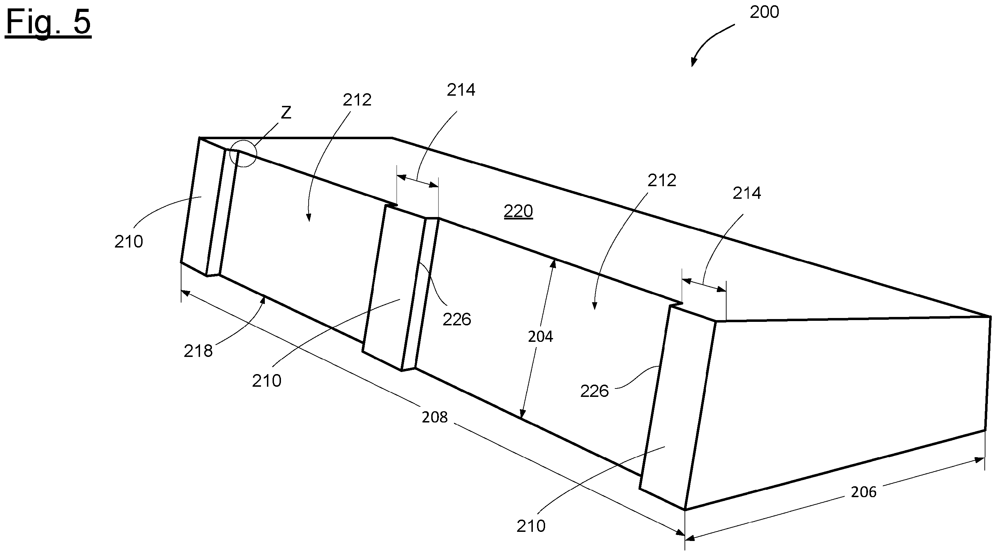

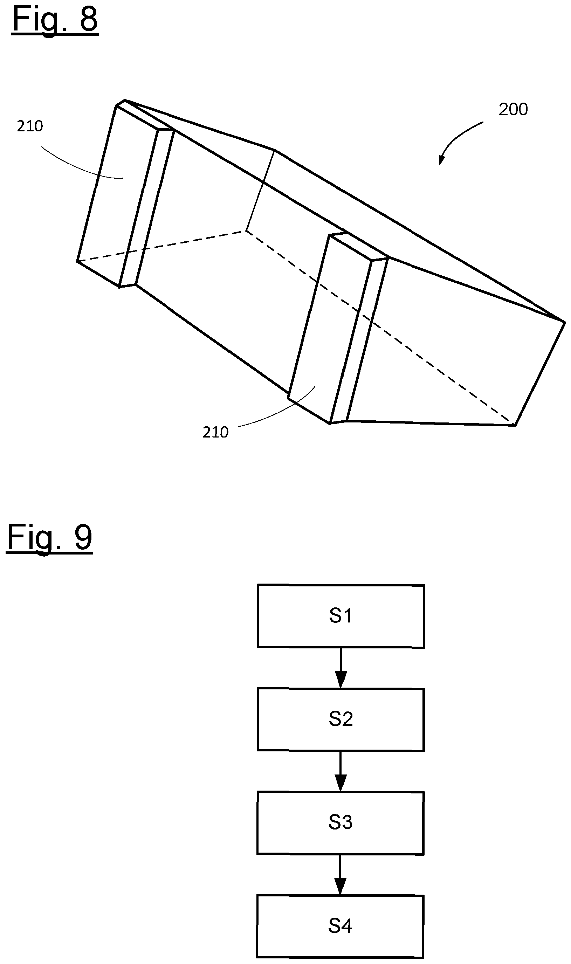

In the following, by the help of FIG. 5 to FIG. 9 a method of manufacturing a half shell 132 of the wind turbine rotor blade 110 with the core element 200 is described, wherein FIG. 9 shows a schematic flowchart of the method.

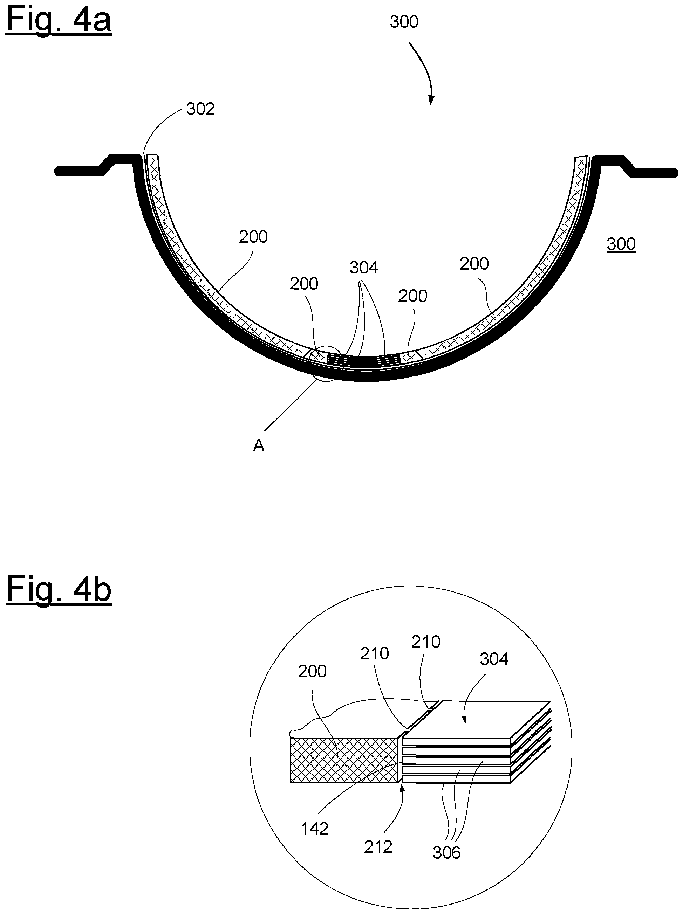

In a step S1 a mold 300 as shown in FIG. 4a is provided. Note that only a cross section of the mold 300 (and not the entire mold for a half shell) is schematically shown.

In a next step S2, one or more fiber layers 302 are placed into the mold 300.

In a next step S3, the stacks 304 of pultruded planks 306 and the core elements 200 are laid into the mold 300 and positioned on top of the fiber layers 302. The pultruded planks 306 are made of carbon fibers. The stacks 304 forms the spar cap 136 of the respective half shell 132. The core elements 200 are arranged next to the outer stacks 304. In Fig. 4b the boundary region between a core element 200 and one of the outer stacks 304 of pultruded planks 306 is shown in more detail. Between the core element 200 and the lateral side 142 of the stack 304 a gap 212 is formed. The gap 212 is created by the projections 210, which hold the core element 200 in a predetermined distance from the stack 304.

In a next step S4, in particular after having provided further elements into the mold 300 like further fiber layers and core elements 200, resin is supplied into the mold 300 during a vacuum infusion process. Thus, the half shell 132 is manufactured.

With respect to FIG. 5 details of the core element 200 according to an embodiment of the invention are described.

The core element 200 is made as one piece. In the present embodiment, the core element 200 is made from polyurethane foam. The core element 200 has an end face 202. The core element 200 has a height (thickness) 204, a width 206 and a length 208. The width 206 extends along the chordwise direction 144 and the length 208 extends along the spanwise direction 120 of the wind turbine rotor blade 110 (see FIG. 3).

The core element 200 has projections 210 (here three projections) at the end face 202. The projections 210 are integrally formed with the core element 200. For example, the projections 210 are formed by milling or cutting the core element 200.

The core element 200 is arranged with the end face 202 on a lateral side 142 of the stack 304, i.e. the spar cap 136. In other words, the core element 200 is placed directly against the stack 304. The end face 202 means the side of the core element 200 which faces the stack 304 (see FIG. 4b) or the spar cap 136 respectively (see FIG. 3). "Directly" means that the core element 200 is at least partially in contact with the lateral side 142 of the respective stack 304, i.e. the spar cap 136, facing the core element 200, namely with the projections 210 (see FIG. 4b). This results in that a gap 212 is formed between the core element 200 and the stack 304, in particular in between two projections 210 with respect to the longitudinal direction 120 (see FIG. 4b and FIG. 5, wherein the gap 212 is indicated).

The projections 210 have a width of projection 214 along a spanwise direction of the core element 200 of at least 15 mm, preferably 20 mm, more preferably 25 mm. In the shown embodiment, the outer two projections 210 exemplarily have a width of projection 214 of 25 mm, whereas the middle projection 210 has a width of projection 214 of 50 mm.

Further, each of the projections 210 have a length 216 which corresponds to the height 204 of the end face 202 of the core element 200. Thus, each projection 210 extends from a bottom side 218 to a top side 220 of the core element 200.

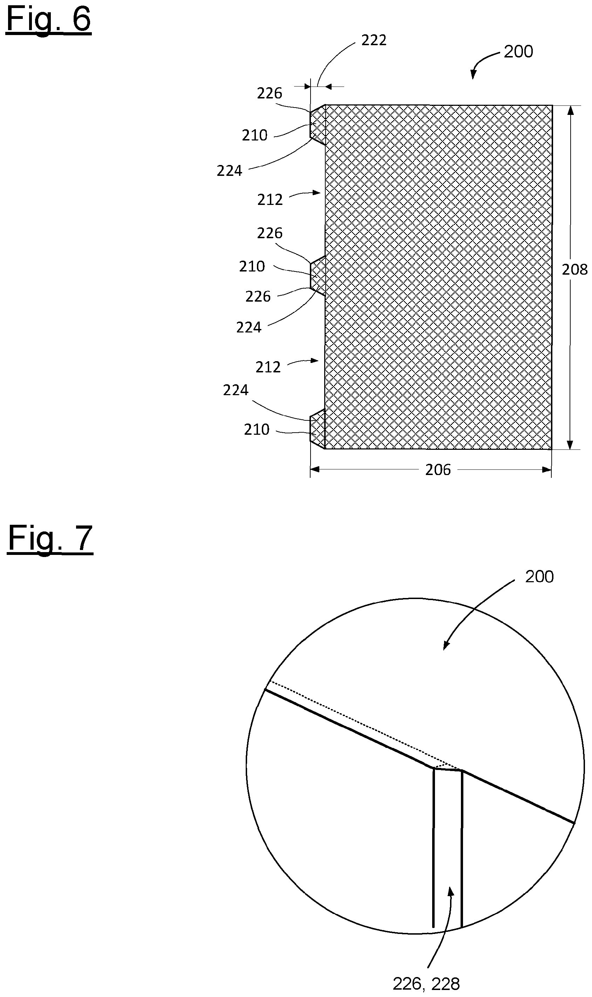

FIG. 6 shows a top view of the core element 200, on the basis of which further details are described. Each projection 210 has a thickness 222 of 1.5 mm from the end face 202, the thickness 222 being measured in a direction normal to the end face 202.

Further, each projection 210 has a trapezoidal shaped cross section 224, viewed in a plane running parallel to a main extension direction of the core element 200.

FIG. 7 shows detail view Z of FIG. 5. Each of the projections 210 has edges 226 along the height 204. In the present embodiment, these edges 226 are rounded. Here, each edge 226 has a radius 228 of 1.5 mm. Thus, a fillet is provided.

FIG. 8 shows a core element 200 according to another embodiment of the invention. The core element 200 of FIG. 8 is essentially like the above-described core element. In contrast to the previously described embodiment, the length 208 of the core element 200 according to FIG. 8 is shorter and it has only two projections 210.

It is further noted that in the present embodiment the stack 304 (not shown) is provided as a prefabricated, single component.

Alternatively, the stack 304 of planks and the core element 200 form together a prefabricated component and are placed into the mold 300 onto the fiber layers 302 as one single prefabricated component.

Further alternatively, the stack 304 of planks is provided as a plurality of individual pultruded planks 306 stacked on top of each other during placement into the mold 300.

### LIST OF REFERENCE SIGNS

100 wind turbine
102 tower
104 foundation
106 nacelle
108 rotor
110 wind turbine rotor blade
112 rotor hub
114 rotor blade root portion
116 transition portion
118 profile portion
120 spanwise direction
122 pressure side
124 suction side
126 rotor blade root end
128 flange connection
130 shell
132 half shell
133 half shell
134 connection region
136 spar cap
138 cross section profile
140 shear web
142 lateral side
144 chordwise direction
146 flapwise direction
200 core element
202 end face
204 height
206 width
208 length
210 projection
212 gap
214 width of projection
216 length
218 bottom side
220 top side
222 thickness
224 trapezoidal shaped cross section
226 edge
228 radius
300 mold
302 fiber layer
304 stack
306 pultruded plank
S1 step
S2 step
S3 step
S4 step
Z detail view

## Claims

1. Method of manufacturing a half shell of a wind turbine rotor blade (110), the method comprising the following steps:
a) providing a mold for the half shell,
b) placing a fiber layer into the mold,
c) placing a stack of prefabricated pultruded planks and a core element on top of the fiber layer, wherein the core element has an end face, said end face having at least two projections being integrally formed with the core element, and
the core element is arranged with the end face on a lateral side of the stack in such a way that by means of the at least two projections a gap is formed between the core element and the stack, and
d) supplying resin into the mold during a vacuum infusion process.

2. The method of claim 1, wherein in step c) the stack of planks is provided as a prefabricated, single component.

3. The method of claim 1, wherein in step c) the stack of planks is provided as a plurality of individual planks stacked on top of each other.

4. The method of claim 1, wherein in step c) the stack of planks and the core element form together a prefabricated component being placed into the mold onto the fiber layer.

5. The method of any one of claims 1 to 4, wherein each projection has a thickness between 1 mm to 2 mm from the end face, preferably between 1,3 mm to 2 mm, more preferably 1.5 mm, the thickness being measured in a direction normal to the end face.

6. The method of any one of claims 1 to 5, wherein at least one of the projections has a trapezoidal shaped cross section, viewed in a plane running parallel to a main extension direction of the core element.

7. The method of any one of claims 1 to 6, wherein edges of each projection are rounded.

8. The method of any one of claims 1 to 7, wherein each projection has a width along a spanwise direction of the core element of at least 15 mm, preferably 20 mm, more preferably 25 mm.

9. The method of any one of claims 1 to 8, wherein the at least two projections have a length corresponding to the height of the end face of the core element.

10. Core element for a half shell of a wind turbine rotor blade, the core element having an end face, the end face being configured to be arranged at a lateral side of a stack of prefabricated pultruded planks, and the end face having at least two projections.

11. Wind turbine rotor blade, comprising two half shells being bonded together to form the wind turbine rotor blade, wherein each half shell is manufactured by a method any one of claims 1 to 9.
